# EUROPÄISCHE PATENTSCHRIFT

(11) **EP 2 548 695 B1**
(45) Veröffentlichungstag und Bekanntmachung des Hinweises auf die Patenterteilung: **26.12.2018**
(21) Anmeldenummer: 12177122.4
(22) Anmeldetag: 19.07.2012
(51) Int. Cl.: B24B 41/00, B24B 41/04, B24B 27/00, B24B 9/00

(54) **Anordnung zur Aufnahme eines Schleifkopfes**
Assembly for holding a grinding head
Agencement destiné à la réception d'une tête de meule

(30) Priorität: 20.07.2011 DE 102011051962
(43) Veröffentlichungstag der Anmeldung: 23.01.2013
(73) Patentinhaber: Sebald Schleifmittel GmbH & Co. KG, 95615 Marktredwitz (DE)
(72) Erfinder: Greulich, Matthias, 95213 Münchberg (DE)
(74) Vertreter: Pröll, Jürgen

(56) Entgegenhaltungen:
- EP-A1- 0 196 941
- EP-A1- 1 520 659
- DE-A1- 3 815 428
- US-A1- 2009 143 207

## Beschreibung

Die Erfindung betrifft eine Anordnung zur Aufnahme eines Schleifkopfes für eine Maschine zum Schleifen von Kanten und/oder Stirnflächen von Werkstücken.

Nach dem Zuschneiden oder Vorfertigen von Werkstücken, beispielsweise Steinen, Steinplatten oder Metallplatten, ist es zumeist erforderlich, die Kanten und/oder Stirnflächen einer Oberflächenbearbeitung zu unterziehen, z. B. die Kanten zu schleifen, zu brechen und ggf. die Stirnflächen zu polieren. Bei der Herstellung von Steinplatten, beispielsweise Steinplatten für Tische, Grabsteine oder Küchenarbeitsplatten, ist es notwendig, die Kanten zu schleifen und zu polieren, je nachdem, ob eine matte oder eine glänzende Kantenoberfläche ausgebildet werden soll.

Maschinen zum Schleifen von Kanten von Werkstücken sind hinlänglich bekannt. So ist beispielsweise aus der EP 0 185 650 A2 ein Hydraulikschlauch für eine Maschine zur Oberflächenbearbeitung der Kanten eines Grabsteines bekannt. Bei dieser Maschine sind zwei übereinander angeordnete, in zueinander senkrechten Richtungen verfahrbare Schlitten vorhanden, wobei der untere Schlitten am Boden in tangentialer Richtung zur Drehachse des Drehtisches geführt ist. Der obere Schlitten, der zur Drehachse des Drehtischs hin verschiebbar ist, weist einen Taster auf, der mit einer Schablone zusammenwirkt, die am Drehtisch befestigt ist. Auf dem oberen Schlitten ist ein Drehkopf mit zur Drehtischplatte paralleler Drehachse angeordnet, von dessen Umfang mehrere trommelförmige, wahlweise einsetzbare Schleifwerkzeuge sternförmig abstehen. Die Schleiftrommel, deren Länge größer ist als die Dicke der Grabsteinkante, poliert die Kanten des Grabsteins mit ihrer Mantelfläche. Um die Lage des Grabsteins an die Schablone anzupassen, ist der Grabstein auf einem aus dem Drehtisch ausfahrbaren Rollenlager verschiebbar angeordnet.

Aus der EP 0 836 920 A1 ist eine Maschine zum Schneiden von Blöcken aus Granit, Marmor und Stein bekannt. Die Maschine ist mit ersten, horizontal an den Fundamenten befestigten Führungsschienen, einem auf diesen Führungsschienen verfahrbaren mobilen Portalrahmen, einer Vorrichtung, um den Portalrahmen entlang der Schienen zu bewegen, und einem ein Schneidwerkzeug tragenden und quer zur Richtung dieser Führungsschiene verfahrbaren Wagen ausgestattet. Eine Zusammenstellung von mehreren Diamantscheiben, deren Schneidrichtung quer zu der der ersten Führungsschiene liegt, ist vorgesehen. Weiterhin sind zwei an dem Portalrahmen befestigte vertikale Säulen mit zwei vertikalen Führungsschienen vorhanden. Schließlich ist eine Brücke angeordnet, deren Enden angepasst sind, um vertikal entlang einer zweiten Führungsschiene zu verfahren, wohingegen der verfahrbare Wagen angepasst ist, um entlang der Brücke verfahrbar zu sein.

Aus DE 87 07 439 U1 ist eine Kantenschleifvorrichtung, insbesondere zum Schleifen von runden oder geraden Steinkanten, bei der der zu schleifende Gegenstand auf einem in einem Rahmen verfahrbaren Wagen gelagert ist, bekannt. Es sind mehrere Schleifeinheiten durch Kraftmittler relativ zum Gegenstand verfahrbar angeordnet, wobei mindestens eine der Schleifeinheiten in einer Ebene senkrecht zur Verfahrensrichtung des Gegenstandes winkelbeweglich in einem Schleifrahmen gelagert ist.

Aus DE 696 653 A ist eine Werkzeugmaschine mit Einrichtungen zum Bearbeiten unregelmäßig geformter Körper durch gleichzeitiges Abtasten zweier benachbarter Schnittformen bekannt. Es ist ein Walzenfräser an einer seiner Stirnkante mit Hilfe einer sich synchron mit dem Werkstück drehenden Profilkurve gesteuert und nach einer sich ebenfalls synchron mit dem Werkstück drehenden benachbarten Profilkurve ist eine der jeweiligen Verbindungslinien zwischen den Profilen entsprechende Neigung vorgesehen. Die Schwenkachse des Walzenfräsers geht durch die Berührungsstelle der gesteuerten Walzenfräserkante mit dem Werkstück.

Aus EP 1 520 656 A1 ist eine Gliederbahn, insbesondere für eine Werkzeugmaschine, bekannt. Die Gliederbahn dient zur Abdeckung von Öffnungen von Werkzeugmaschinen oder dergleichen, mit gelenkig miteinander verbundenen Gliedern, die um einen begrenzten Winkel relativ zueinander verschwenkbar sind und die auf einer Seite einen Kopplungsvorsprung und auf der anderen Seite eine entsprechende Kopplungsaufnahme aufweisen. Die Kopplungsvorsprünge und die Kopplungsaufnahmen sind jeweils mit einer Aussparung für einen Stift versehen.

Aus der DE 101 54 367 A1 ist ein Verfahren zum mechanischen Bearbeiten von Steinen, insbesondere von Pflastersteinen aus Beton oder dergleichen, bekannt. Bei diesem Verfahren wird mit zumindest einer Bearbeitungseinrichtung wenigstens ein Arbeitszyklus ausgeführt, bei dem wenigstens eine Kante zumindestens eines Steines mit wenigstens einem Werkzeug bearbeitet wird, um dem Stein das Aussehen eines behauenen natürlichen Steines bzw. eines "künstlich gealterten" Steines zu geben.

Aus der DE 103 23 346 A1 ist eine Kantenschleifmaschine zur Anbringung eines Kantenprofils an ebenen Werkstücken aus einem harten Material wie Tisch- und Arbeitsdeckplatten, Grabsteinen usw. bekannt. Die Kantenschleifmaschine weist eine Werkzeugspindel zum Befestigen eines Schleifwerkzeuges auf. Indem das Schleifwerkzeug entlang der Oberfläche des zu bearbeitenden Werkstückes mittels eines bewegbaren Führungsflanschs erfolgt, kann eine Kante des Werkstückes bearbeitet werden. Um eine beschädigungsfreie Führung der Kantenschleifmaschine entlang des zu bearbeitenden Werkstücks sicherzustellen ist vorgesehen, dass der Führungsflansch eine Abtasteinrichtung mit an seiner dem Schleifwerkzeug zugewandten Seite angeordneten Einrichtungen zum Ausbringen eines Gleitmediums aufweist.

Aus der US 2009/0143207 A1 ist ein umkonfigurierbares System mit mindestens einer abtrennbaren Komponente und mindestens einer abnehmbare Kopfanordnung bekannt. Das umkonfigurierbare System kann eine numerisch gesteuerte Maschine sein, die in einen Herstellungsprozess, z. B einem Fräsvorgang oder einem Vorgang zur Setzung einer Faser, integriert ist. Das umkonfigurierbare System kann weiterhin eine Gerüststruktur umfassen mit beweglich angebrachten Träger, auf denen abnehmbare Komponenten beweglich angebracht sind. Die abnehmbaren Komponenten können eine konkave Komponente und eine konvexe Komponente enthalten. Die mindestens eine abnehmbare Kopfbaugruppe kann beweglich angeordnet sein. Die abnehmbaren Komponenten und die mindestens eine abnehmbare Kopfbaugruppe können an mindestens einer elektrisch bzw. pneumatisch Verbindungsbaugruppe verbunden sein, die an der Gerüststruktur befestigt ist.

Aus der DE 38 15 428 A1 ist eine Vorrichtung zum Aufrauhen der Seitenkanten des Schuhschaftes einer Schuheinheit bekannt. Die Vorrichtung weist ein umlaufendes Aufrauhwerkzeug auf, das mittels einer Bewegungseinrichtung um die auf einen Schuhträger aufgesetzte Schuheinheit längs eines vorprogrammierten Weges herum bewegt wird. Dabei ist das Aufrauhwerkzeug um drei sich in einem Punkt schneidende Achsen schwenkbar gelagert, so dass es sich an jeder Bearbeitungsstelle auf die räumliche Ausrichtung des Schuhschaftes optimal einstellen kann. Diese Einstellung ist programmierbar, wozu eine den gesamten selbsttätigen Arbeitsablauf steuernde Programmsteuerungseinrichtung vorgesehen ist.

Aus der DE 44 33 715 C1 ist eine Maschine zur Oberflächenbearbeitung der Kanten eines Grabsteins oder eines plattenförmiger Werkstücks bekannt, welche eine in einem Schleifspindelstock gelagerte Schleifscheibe, einen Tisch zur Aufnahme des Werkstücks und Einrichtungen zur elektronischen Steuerung der Schleifscheibe, entsprechend dem Verlauf der Kanten des Werkstückes aufweist. Die Maschine ist mit einem parallel zur Tischebene verschiebbaren Tragarm versehen, der in die Steuerung der Maschine mit einbezogen ist. Um eine Hauptachse ist bzw. sind der Tisch und/oder der Tragarm drehbar. Der Schleifspindelstock ist am Tragarm um eine parallel zur Hauptachse verlaufende Achse schwenkbar und ebenfalls in die Steuerung mit einbezogen. Der Spindelstock ist am Tragarm senkrecht zur Tischebene verfahrbar geführt.

Nachteilig beim bekannten Stand der Technik ist, dass die bekannten Kantenbearbeitungsmaschinen, die eine kompakte Bauform aufweisen, in ihren Bearbeitungsmöglichkeiten hinsichtlich Material und Bearbeitungshöhe stark eingeschränkt sind. So ist es nicht möglich, den Schleifkopf direkt vertikal zum Werkstück zu verfahren. Da oft unterschiedliche Werkstücke hinsichtlich ihrer Größe und Materialqualität bearbeitet werden müssen, sollte eine entsprechende Maschine eine Werkstückgröße mit Abmessungen von mindestens 3500 mm x 100 mm x 400 mm bearbeiten können. Dies führt aber bezüglich der Bearbeitungshöhe von 100 mm zu einer Verdoppelung der nach dem Stand der Technik bearbeitbaren Kantenhöhe, da diese nur Werkstücke mit einer maximalen Höhe von 50 mm zu bearbeiten erlauben. Aufgabe der vorliegenden Erfindung ist es, die Nachteile des Standes der Technik zu vermeiden und eine Vergrößerung der vertikalen Höhenverstellung des Schleifkopfes gegenüber dem in der Maschine eingelegten Werkstück zu ermöglichen.

Diese Aufgabe wird mit den Merkmalen des Patentanspruchs 1 gelöst. Weitere vorteilhafte Ausgestaltungen der Erfindung ergeben sich anhand der abhängigen Patentansprüche sowie der weiteren Beschreibung.

Die erfindungsgemäße Anordnung dient zur Aufnahme eines Schleifkopfes für eine Maschine zum Schleifen von Kanten und/oder Stirnflächen von Werkstücken. Die Anordnung besteht aus einer C-ringförmigen Führung, auf oder an der der Schleifkopf zumindest partiell um das in der Maschine eingelegte Werkstück verschwenkbar angeordnet ist. Der Schleifkopf ist zusätzlich gemeinsam mit der C-ringförmigen Führung ebenfalls zumindest partiell um das in der Maschine eingelegte Werkstück verschwenkbar angeordnet. Unter einer C-ringförmigen Führung im Sinne der Erfindung ist eine Führung zu verstehen, die im Prinzip eine C-Form hat und nahezu rund ist. Die C-ringförmige Führung ist an einer vertikalen Führung anordenbar und der Schleifkopf ist gemeinsam mit der C-ringförmigen Führung entlang der vertikalen Führung vertikal gegenüber dem in der Maschine eingelegten Werkstück verschiebbar.

Vorteilhaft gemäß Patentanspruch 2 ist, dass die C-ringförmige Führung an einer zweiten vertikalen Führung und/oder an einer bogenförmigen Führung anordenbar ist. Durch die zweite vertikale Führung und die bogenförmige Führung kann durch eine vertikale Verschiebung der C-ringförmigen Führung entlang der zweiten vertikalen Führung und/oder der entlang der bogenförmigen Führung der Schleifkopf mit der C-ringförmigen Führung vertikal noch weiter verschoben werden als dies alleinig mit der vertikalen Führung möglich wäre. Über die Verschiebung entlang der Oberfläche der bogenförmigen Führung ist es möglich, den Schleifkopf mit der C-förmigen Führung gegenüber dem zu bearbeitenden Werkstück nochmals zu drehen und den Winkel zwischen dem Schleifkopf und dem Werkstück zu verändern.

Es ist vorgesehen, dass die C-ringförmige Führung eine die C-ringförmige Form aufnehmende Rollenbahn aufweist, in welcher mindestens zwei Rollen und mindestens eine Bremseinheit einführbar sind, welche mit einem Rollenhalter verbunden sind, und diese Rollen die C-ringförmige Führung verdrehbar um das Zentrum der C-ringförmigen Führung lagern und der Rollenhalter mit der vertikalen Führung und/oder der zweiten vertikalen Führung verbunden ist. Durch die Rollen ist die C-ringförmige Führung um ihr Zentrum drehbar gelagert und mittels der Bremseinheit ist die C-ringförmige Führung in jeder gewünschten Drehposition arretierbar.

Vorteilhaft gemäß Patentanspruch 3 ist, dass der Schleifkopf auf oder an der C-ringförmigen Führung mittels mindestens einer am Gehäuse des Schleifkopfes angeordneten Führungsrolle entlang mindestens einer Lauffläche und entlang der C-förmigen Führung geführt ist. Durch die Führungsrolle und die Laufflächen ist eine definierte Drehbewegung des Schleifkopfes entlang der Laufflächen der C-ringförmigen Führung gegeben. Zugleich wird die Reibung zwischen den sich berührenden Flächen minimiert und es ist eine automatisierte Bewegung des Schleifkopfes mittels einer hydraulischen und/oder elektrischen Einheit, gesteuert über die Steuereinheit der Maschine, möglich.

Vorteilhaft gemäß Patentanspruch 4 ist, dass die bogenförmige Führung ein Tragarm der Maschine ist und über entsprechende Lagerungen an der Maschine in horizontaler Richtung entlang des Werkstückes verschiebbar angeordnet ist. Es kann daher die Anordnung an eine Schleifmaschine mit einem Tragarm, der in horizontaler Ebene zur Maschine gesteuert verfahrbar ist, angeordnet werden.

Vorteilhaft gemäß Patentanspruch 5 ist, dass die zweite vertikale Führung mit der vertikalen Führung verbunden ist. Hierdurch ist es möglich, den vertikalen Verschiebeweg der ersten Führung und der zweiten vertikalen Führung zu nutzen.

Vorteilhaft gemäß Patentanspruch 6 ist, dass am Schleifkopf ein Anschlag angeordnet ist, mittels dessen der Schleifkopf gemeinsam mit der C-ringförmigen Führung, der vertikalen Führung und/oder der zweiten vertikalen Führung in einer vordefinierten Lage zu mindestens einer der Oberflächen der bogenförmigen Führung anordenbar und/oder an der bogenförmigen Führung fixierbar ist. Mittels des Anschlages ist es möglich, den Schleifkopf und die C-ringförmige Führung und die vertikale Führung und/oder die zweite vertikale Führung in einer vordefinierten Lage an die bogenförmige Führung anzubringen.

Vorteilhaft gemäß Patentanspruch 7 ist, dass der Schleifkopf fest mit der C-ringförmigen Führung verbindbar ist und/oder die C-ringförmige Führung mittels der mindestens einen Bremseinheit im Schleifbetrieb des Schleifkopfs arretierbar ist. Somit kann zwischen der C-ringförmigen Führung und dem Schleifkopf eine mechanisch stabile und belastbare Verbindung erfolgen und im Schleifbetrieb wird durch die Bremseinheit gewährleitet, dass die Kombination von Schleifkopf und C-ringförmiger Führung arretiert bleibt.

Vorteilhaft gemäß Patentanspruch 8 ist, dass der Schleifkopf zur Aufnahme von mindestens einer Schleifscheibe oder Schleifeinheit dient und der Schleifkopf mittels einer elektronischen Steuerung mittels eines elektrischen und/oder hydraulischen Antriebs verschiebbar ist. Somit kann der Schleifkopf über die Steuereinheit der Maschine mitgesteuert werden.

In einer vorteilhaften Ausgestaltung der Erfindung nach Patentanspruch 9 ist bevorzugt, dass die C-ringförmige Führung gemeinsam mit dem an ihr angeordneten Schleifkopf an der vertikalen Führung und/oder der zweiten vertikalen Führung von einer elektrische Antriebseinheit, gesteuert von der Steuereinheit der Maschine, verschiebbar ist und/oder dass die bogenförmige Führung über die Steuereinheit der Maschine mittels mindestens einer Antriebseinheit, elektrischer oder hydraulischer Art, horizontal entlang des Werkstückes verschiebbar angeordnet ist.

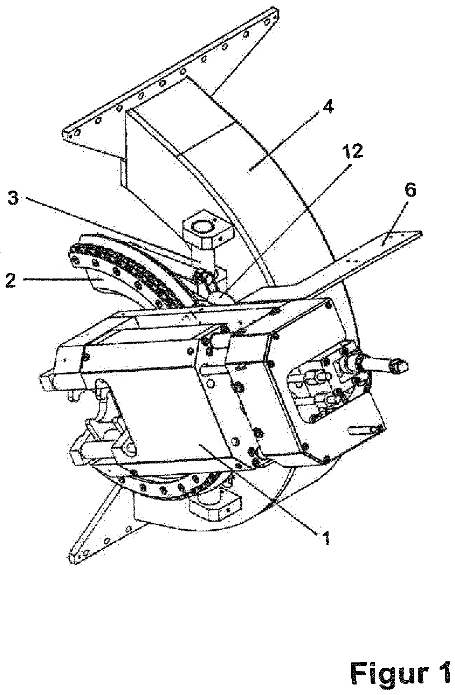

Im Folgenden wird die Erfindung anhand konkreter Ausführungsbeispiele anhand der Figuren 1 bis 8 näher erläutert. Diese Beschreibung der Erfindung anhand der konkreten Ausführungsbeispiele stellt keine Limitierung der Erfindung auf eines dieser konkreten Ausführungsbeispiele dar.

Die Ausführungsbeispiele zeigen die Erfindung anhand möglicher Ausführungsdarstellungen und in spezifischen Ausgestaltungen.

Es zeigen:
- Figur 1: eine Schrägansicht einer erfindungsgemäßen Anordnung zur Aufnahme eines Schleifkopfes;
- Figur 2: eine Draufsicht einer erfindungsgemäßen Anordnung;
- Figur 3: eine Schrägansicht einer erfindungsgemäßen Anordnung;
- Figur 4: eine Explosionszeichnung einer erfindungsgemäßen Anordnung;
- Figur 5: eine Darstellung der Seitenansicht einer erfindungsgemäßen Anordnung;
- Figur 6: eine C-ringförmige Führung mit Linearführung;
- Figur 7: einen Rollenhalter;
- Figur 8: eine C-ringförmige Führung in Seitenansicht; und
- Figuren 9 und 10: die möglichen Bewegungen der Anordnung und des Schleifkopfes.

Figur 1 zeigt eine Schrägansicht einer erfindungsgemäßen Anordnung zur Aufnahme eines Schleifkopfes 1. Der Schleifkopf 1 besteht aus einem elektrischen Antrieb, insbesondere einem Elektromotor, und einer Aufnahmeeinheit von Schleifeinheiten, insbesondere in Form von Schleifscheiben. Hierzu ist eine Schleifspindel vorgesehen, auf bzw. in welche die Schleifeinheiten anordenbar sind. Der Schleifkopf 1 ist an einer C-ringförmigen Führung 2 angeordnet. Bei der als C-ringförmigen Führung 2 bezeichneten Führung handelt es sich um eine solche, die im wesentlich ein C ausbildet und nahezu rund ist. Der Schleifkopf 1 ist auf oder an oder mit der C-ringförmigen Führung 2 verbindbar und entlang bzw. auf der C-ringförmigen Führung 2 verschiebbar. Der Schleifkopf 1 weist hierzu Führungsrollen 12 auf, wobei mindestens zwei innere Führungsrollen und mindestens eine äußere Führungsrolle oder mindestens zwei äußere Führungsrollen und mindestens eine innere Führungsrolle am Schleifkopfgehäuse angeordnet sind. Im Weiteren ist eine Arretierung vorgesehen, mittels welcher der Schleifkopf 1 in der eingestellten Position gegenüber der C-ringförmigen Führung 2 arretierbar ist. Der Schleifkopf 1 ist um das Zentrum der C-ringförmigen Führung 2, das die Drehachse bildet, verstellbar und kann somit zu einem auf der Maschine angeordneten Werkstück nahezu jede beliebige Winkelposition einnehmen. Es können nahezu alle Winkelstellungen des Schleifkopfes 1 zwischen 90 Grad und -90 Grad zur Horizontalen gegenüber dem Werkstück eingestellt werden. Die C-ringförmige Führung 2 ist mit einer vertikalen Führung 3 verbindbar. Die vertikale Führung 3 dient dazu, um die C-ringförmige Führung 2 gemeinsam mit dem an ihr angeordneten Schleifkopf 1 vertikal zum Werkstück, das in der Maschine angeordnet ist, zu verschieben. Auf diese Weise kann die Bearbeitungsgröße des Werkstücks erheblich vergrößert und variiert werden. Weiterhin ist eine bogenförmige Führung 4 angeordnet, an welcher die C-ringförmige Führung 2 und die vertikale Führung 3 befestigbar sind.

In einer vorteilhaften Ausgestaltung der Erfindung ist vorgesehen, dass die vertikale Führung 3 und die C-ringförmige Führung 2 mit dem an dieser angeordneten Schleifkopf 1 entlang der bogenförmigen Führung 4 verschieblich anordenbar sind. Somit kann eine individuelle Anpassung an die Größe eines zu bearbeitenden Werkstückes erfolgen, da die gesamte Einheit, bestehend aus Schleifkopf 1, C-ringförmiger Führung 2 und vertikaler Führung 3, nochmals in der Höhe und im Winkel zur Maschine variiert werden kann, nämlich durch Verschieben entlang der Oberfläche der bogenförmigen Führung 4. Im Weiteren ist vorgesehen, dass die C-ringförmige Führung 2 mit dem darauf angeordneten Schleifkopf 1 selbst um die Drehachse, welche im Zentrum der C-ringförmige Führung 2 liegt, gedreht werden kann. Somit besteht die Möglichkeit, sowohl den Schleifkopf 1 allein auf der C-ringförmigen Führung 2 um die Drehachse als auch die C-ringförmige Führung 2 mit dem Schleifkopf 1 um die Drehachse gegenüber dem in der Maschine eingelegten Werkstück zu drehen und/oder zu verschwenken.

Die bogenförmige Führung 4 stellt einen Tragarm der Maschine dar. Dieser Tragarm ist an der Maschine in der Weise gelagert, dass der Tragarm in horizontaler Richtung entlang des Werkstückes, das in der Maschine einlegbar ist, verschiebbar ist. Die Verschiebung des Tragarms erfolgt hydraulisch und/oder elektrisch mittels einer Hydraulikeinheit und/oder eines Elektromotors und wird von der Steuereinheit der Maschine gesteuert.
Die Drehung des Schleifkopfes 1 entlang der C-ringförmigen Führung 2 kann in einer vorteilhaften Ausgestaltung der Erfindung über Führungsrollen 12 mittels einer hydraulischen oder elektrischen Antriebseinheit, vorzugsweise eines Elektromotors, erfolgen. Im Weiteren kann die Verdrehung der C-ringförmigen Führung 2 gemeinsam mit dem auf ihr angeordneten Schleifkopf 1 ebenfalls über eine entsprechende elektrische/hydraulische Einheit vorgenommen werden, wiederum gesteuert von der Steuereinheit der Maschine. Schließlich können auch die vertikale Höhenverstellung an der vertikalen Führung 3 sowie die Verstellung entlang der bogenförmigen Führung 4 mittels eines Elektromotors und/oder einer hydraulischen Einheit erfolgen, wobei diese Verstellung wiederum durch die in der Maschine angeordnete Steuereinheit steuerbar ist. Schließlich ist am Schleifkopf 1 ein Anschlag 6 angeordnet, der dazu dient, den Schleifkopf 1 mit der C-ringförmigen Führung 2 und der vertikalen Führung 3 vordefiniert orientiert an der bogenförmigen Führung 4 anzuordnen und dort zu befestigen.

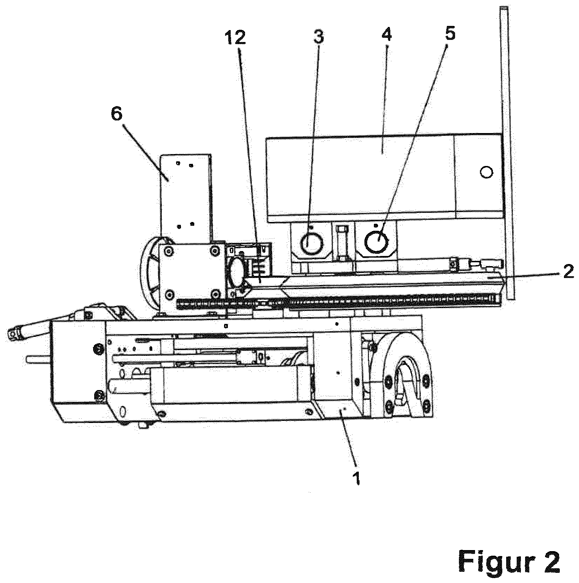

Figur 2 zeigt eine Draufsicht auf eine erfindungsgemäße Anordnung. Es sind der Schleifkopf 1, der Anschlag 6, die C-ringförmige Führung 2, die vertikale Führung 3 und die bogenförmige Führung 4 dargestellt. Darüber hinaus ist eine zweite vertikale Führung 5 angeordnet. An dieser zweiten vertikalen Führung 5 ist die vertikale Führung 3 angeordnet. Über diese zweite vertikale Führung 5 kann in vertikaler Richtung die C-ringförmige Führung 2 mit der vertikalen Führung 3 und dem Schleifkopf 1 nochmals und zusätzlich in vertikaler Richtung verschoben werden. Der Bereich der vertikalen Verschiebung von der vertikalen Führung 3 und der zweiten vertikalen Führung 5 kann somit parallel und/oder gemeinsam verwendet werden.

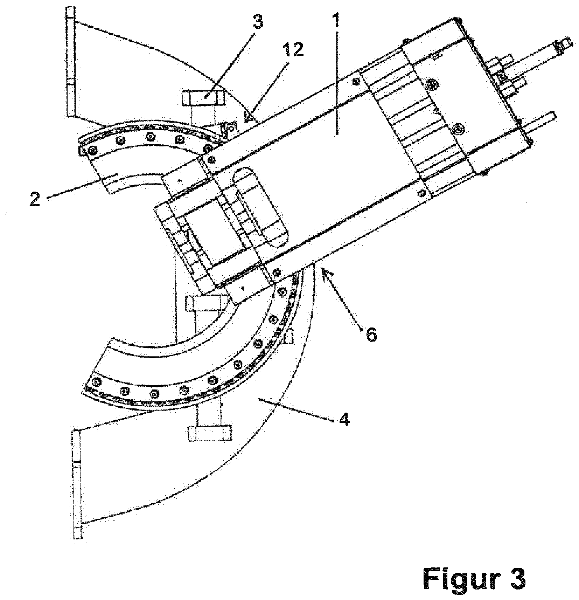

In Figur 3 ist eine Schrägansicht der erfindungsgemäßen Anordnung dargestellt. Es ist der Schleifkopf 1 dargestellt. Der Schleifkopf 1 ist entlang der C-ringförmigen Führung 2 aus einer horizontalen Lage in eine geneigte Lage um die Drehachse, das Zentrum der C-ringförmigen Führung, gedreht. Es sind weiterhin die vertikale Führung 3 und die bogenförmige Führung 4 dargestellt, an der die vertikale Führung 3, die C-ringförmige Führung 2 und der Schleifkopf 1 anordenbar sind.

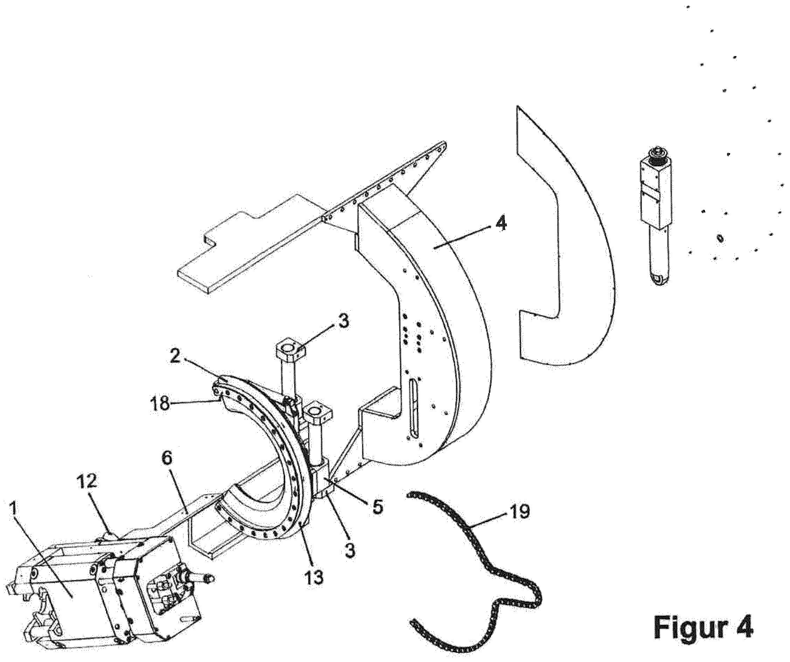

Figur 4 zeigt eine Explosionszeichnung einer erfindungsgemäßen Anordnung. Es sind der Schleifkopf 1 und die am Gehäuse des Schleifkopfes 1 angeordnete äußere Führungsrolle 12 dargestellt. Weiterhin ist der Anschlag 6 zu sehen. Darüber hinaus ist die C-ringförmige Führung 2 dargestellt, die an den zwei vertikalen Führungen 3 und 5 angeordnet ist und über diese in der vertikalen Lage zur Maschine verstellbar ist. Weiterhin ist die bogenförmige Führung 4, die den Tragarm der Maschine darstellt, eingezeichnet. Darüber hinaus ist eine bewegliche Rollenkette 19 angeordnet, die in die C-ringförmige Führung 2 in eine dort vorgesehene Rollenbahn einführbar ist, und somit ist der C-Ring 18 in der C-ringförmigen Führung 2 mit einem auf ihm bzw. an ihm angeordneten Schleifkopf 1 verdrehbar. Somit kann über die Führungsrollen 12 der Schleifkopf 1 entlang der C-ringförmige Führung 2 an dort vorgesehenen Laufflächen 13 entlang rollen und ist somit verschiebbar und drehbar. Die Arretierung des Schleifkopfes 1 erfolgt am C-Ring 18. Die C-ringförmige Führung 2 ist an der vertikalen Führung 3 und der zweiten vertikalen Führung 5 angeordnet und somit kann die C-ringförmige Führung 2 zweifach, nämlich in Abhängigkeit von der vertikalen Führung 3 und der zweiten vertikalen Führung 5, horizontal verändert werden. Die C-ringförmige Führung 2 kann aber ebenfalls, wie im nachfolgenden noch anhand eines Ausführung der Erfindung dargestellt werden wird, um ihr Zentrum, das die Drehachse bildet, verdreht werden.

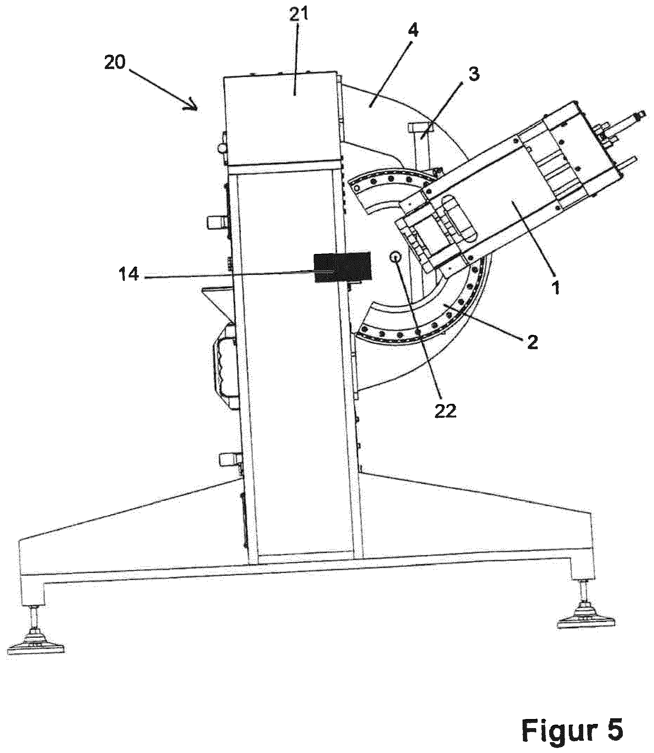

Figur 5 zeigt eine Seitenansicht einer erfindungsgemäßen Anordnung angeordnet an einer Maschine 20. Bei der Maschine 20 ist deren Tisch 21 dargestellt, auf welchem ein Werkstück 14 fest einspannbar ist. An das Werkstück 14 wird nunmehr der Schleifkopf 1 mit einem in Figur 5 nicht dargestellten Schleifelement, vorzugsweise einer Schleifscheibe, herangeführt und mittels der bogenförmigen Führung 4 horizontal entlang des Werkstücks 14 bewegt. Der Schleifkopf 1 ist in beschriebener Weise um die C-ringförmige Führung 2 und deren gedachte Drehachse 22 drehbar, sowie darüber hinaus in der beschriebenen Weise über den C-Ring 18 nochmals zusätzlich um die Drehachse 22 verdrehbar. Darüber hinaus ist die C-ringförmige Führung 2 über die vertikale Führung 3 in der Höhe verstellbar, so dass größere Werkstücke 14, insbesondere Werkstücke mit größerer Bauhöhe, bearbeitet werden können. Relevant ist hierbei, dass die C-ringförmige Führung 2 eine Öffnung aufweist und durch geeignetes Verdrehen des Schleifkopfes 1 und/oder der C-ringförmigen Führung 2 um die Drehachse der Schleifkopf 1 auch an Werkstücke 14 heranführbar ist, deren Höhe die Öffnung der C-ringförmigen Führung 2 übersteigt. Es kann damit auf einfache Weise die für eine Maschine bearbeitbaren Größen von Werkstücken erhöht werden. In diesem Fall kann sodann eine der Kanten des Werkstücks 14 (alleinig) bearbeitet werden. Darüber hinaus kann über die vertikale Führung 3 der Schleifkopf 1 mit der C-ringförmigen Führung 2 in der Höhe angehoben werden. Dies ermöglicht nochmals eine Vergrößerung der Höhe des möglichen zu bearbeitenden Werkstückes 14.

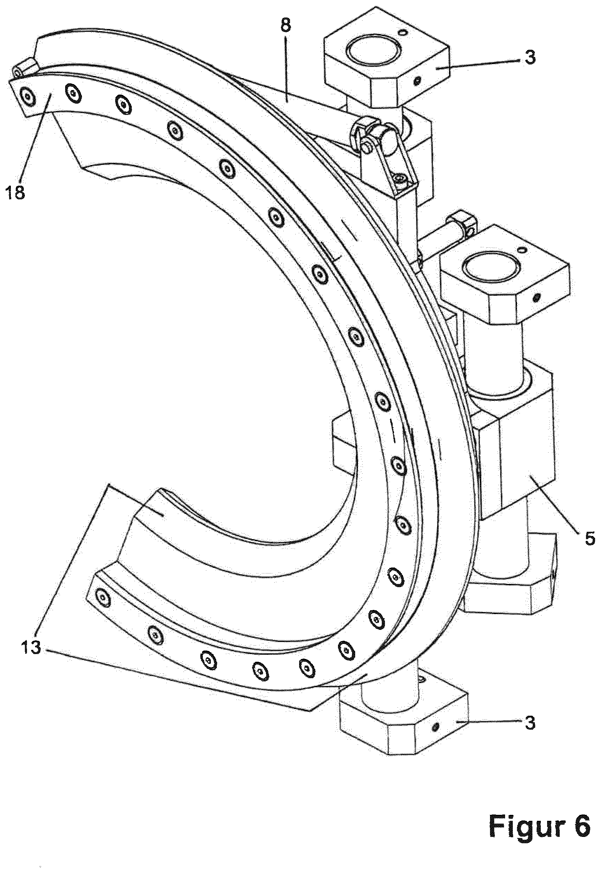

In Figur 6 ist eine C-ringförmige Führung 2 dargestellt. Die C-ringförmige Führung 2 ist an der vertikalen Führung 3 und diese an der zweiten vertikalen Führung 5 angeordnet. Somit kann die C-ringförmige Führung 2 entlang der vertikalen Führung 3 vertikal in der Höhe verändert werden. Die vertikale Führung 3 kann gemeinsam mit der C-ringförmigen Führung 2 entlang der zweiten vertikalen Führung 5 nochmals vertikal verändert werden.

Es ist ein Zylinder 8 vorgesehen, der auf den C-Ring 18 einwirkt. Über den Zylinder 8 kann der C-Ring 18 in der C-ringförmigen Führung 2 verstellt werden. Die Arretierung des S-Rings 18 erfolgt anhand der Bremseinheit 7. Die C-ringförmige Führung 2 weist Laufflächen 13 auf, auf welchem Führungsrollen 12 des Schleifkopfes 1 geführt werden können.

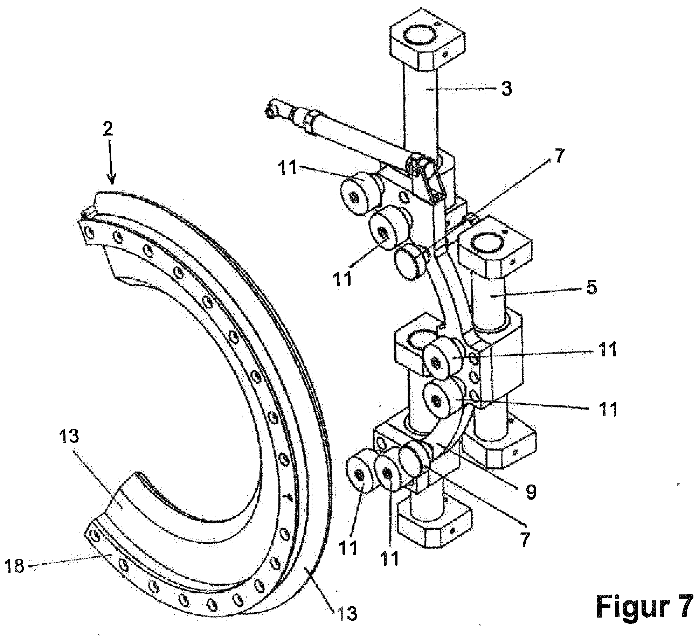

In Figur 7 ist eine weitere C-ringförmige Führung 2 mit einer Anordnung zum Verdrehen selbiger als vorteilhafte Ausgestaltung der Erfindung dargestellt. Hierzu weist die C-ringförmige Führung 2 eine Rollenbahn auf, in welche Rollen 11 und Bremseinheiten 7, angeordnet an einem Rollenhalter 9, zu liegen kommen. Durch diese Rollen 11 ist die C-ringförmige Führung 2 um die Drehachse, die im Zentrum der C-ringförmige Führung 2 liegt, drehbar gelagert. Auf diese Weise kann die C-ringförmige Führung 2 um ihre gedachte Mittenachse gedreht werden.

Der Rollenhalter 9 ist in der Ausführung gemäß Figur 7 an der vertikalen Führung 3 und der zweiten vertikalen Führung 5 angeordnet und dort befestigt.

In einer vorteilhaften Ausgestaltung der Erfindung ist der Rollenhalter 9 lediglich an der vertikalen Führung 3 angeordnet und die vertikale Führung 3 ist wiederum an der zweiten vertikalen Führung 5 angeordnet.

Ist nunmehr der Schleifkopf 1 in die gewünschte Stellung verbracht, so wird über die mindestens eine Bremseinheit(en) 7 die C-ringförmige Führung 2 und insbesondere der C-Ring 18 arretiert und ein Schleifen ohne ein Verschieben des Schleifkopfes durch die einwirkende Kraft ist ermöglicht.

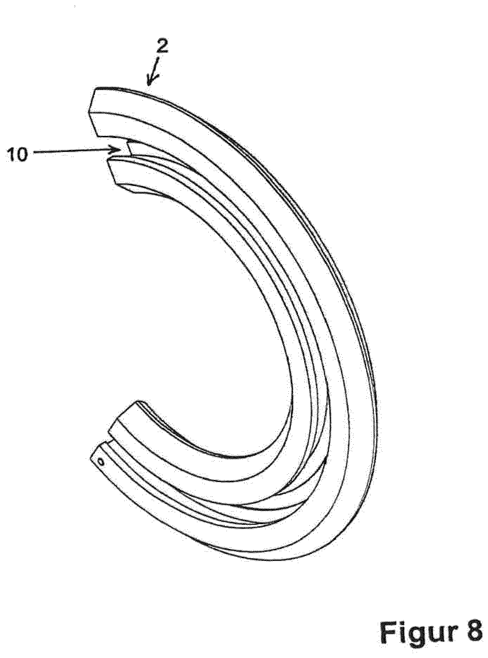

In Figur 8 ist eine weitere C-ringförmige Führung 2 dargestellt. Dort ist die Rollenbahn 10 dargestellt, in welcher die Rollen des Rollenhalters, gemeinsam mit den Bremseinheiten, zu liegen kommen.

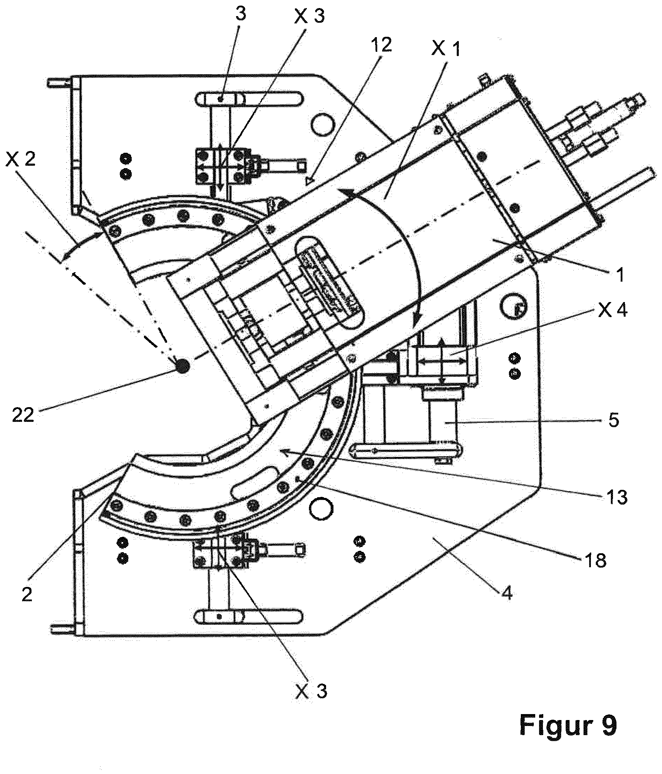

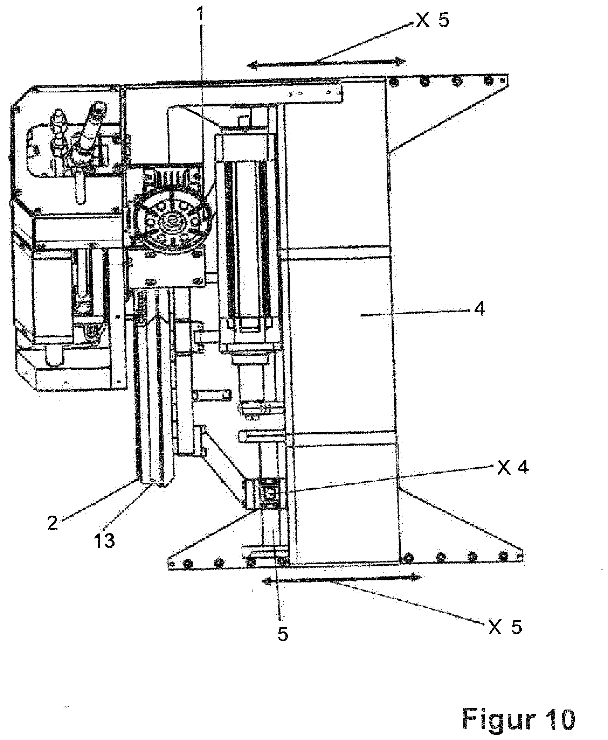

In den Figuren 9 und 10 sind die möglichen Bewegungen der Anordnung und des Schleifkopfes 1 entlang oder an der Anordnung um das Werkstück 14 dargestellt.

In Figur 9 ist die Bewegung X1 des Schleifkopfes 1 entlang oder an der C-ringförmigen Führung 2 dargestellt. Der Schleifkopf 1 ist in Bewegungsrichtung X1, d. h. in Form einer Drehbewegung, um die Drehachse 22 entlang der C-ringförmigen Führung 2 beweglich. Somit kann der Schleifkopf 1 um das Werkstück 14 bewegt werden. Im Weiteren ist nunmehr die C-ringförmige Führung 2, insbesondere mittels deren C-Ring 18, der in der C-ringförmigen Führung 2 verschieblich, vorzugsweise auf Kugeln oder Rollen, gelagert ist, gemeinsam mit dem Schleifkopf 1 um die Drehachse 22 beweglich. Somit können zwei Drehbewegungen ausgeführt werden, nämlich der Schleifkopf 1 gemäß Bewegungsrichtungen X1 alleinig um die Drehachse 22 sowie der Schleifkopf 1 gemeinsam mit der C-ringförmigen Führung 2 anhand deren C-Ring 18, ebenfalls um die Drehachse 22 gemäß Bewegungsrichtungen X2. Diese Bewegungsrichtungen des C-Rings 18 in der C-ringförmigen Führung 2 sind mit X2 bezeichnet. Darüber hinaus kann die C-ringförmige Führung 2 mit dem Schleifkopf 1 eine Vertikal- wie eine Horizontalbewegung entlang der vertikalen Führungen 3 ausführen, diese Bewegungen sollten natürlich zueinander parallel erfolgen, können aber auch antiparallel erfolgen. Die Bewegungen sind mit X3 bezeichnet. Schließlich kann eine Horizontal- und Vertikalbewegung der C-ringförmigen Führung 2 gemeinsam mit dem Schleifkopf 1 in Bewegungsrichtung X4 vertikal und horizontal erfolgen.

In Figur 10 ist eine Draufsicht, analog zu Figur 2, dargestellt, wobei der Blickwinkel anders als bei Figur 2 ist. Es ist der Schleifkopf 1 auf der C-ringförmigen Führung 2 angeordnet und, wie beschrieben, beweglich. Gleiches gilt für die C-ringförmige Führung 2. Es ist die Lauffläche 13 an der C-ringförmigen Führung 2 dargestellt, entlang welcher der Schleifkopf 1 beweglich ist. Darüber hinaus ist die bogenförmige Führung 4 in beschriebener Weise angeordnet, an welcher die C-ringförmige Führung 2 angeordnet ist. Die bogenförmige Führung 4 ist nunmehr in der Weise ausgestaltet, dass diese gemäß der Bewegungsrichtung X5 entlang der Werkzeugmaschine, an welcher sie angeordnet ist, führbar ist und/oder dass der Schleiftisch, auf dem das Werkstück 14 angeordnet ist, in Bewegungsrichtung X5 horizontal, gegebenenfalls auch vertikal verschiebbar ist. Darüber hinaus ist dargestellt, dass über die zweite vertikale Führung 5 eine weitere Vertikalbewegung des Schleifkopfes 1 gemeinsam mit der C-ringförmigen Führung 2 möglich ist.

Durch eine geeignete Steuerung, die als elektronische Steuereinheit ausgeführt ist, können nunmehr die Bewegungsrichtungen X1, X2, X3, X4 und X5 zueinander in der Weise gesteuert oder miteinander gesteuert werden, dass nahezu eine jede beliebige Schleifkontur abgefahren werden kann.

## Patentansprüche

1. Anordnung zur Aufnahme eines Schleifkopfes (1) für eine Maschine (20) zum Schleifen von Kanten und/oder Stirnflächen von Werkstücken (14), bestehend aus einer C-ringförmigen Führung (2), auf oder an der der Schleifkopf (1) zumindest partiell um das in der Maschine (20) eingelegte Werkstück (14) verschwenkbar angeordnet ist,
wobei zusätzlich der Schleifkopf (1) mit der C-ringförmigen Führung (2) zumindest partiell um das in der Maschine (20) eingelegte Werkstück (14) verschwenkbar ist, dass die C-ringförmige Führung (2) an einer vertikalen Führung (3) angeordnet ist und dass der Schleifkopf (1) gemeinsam mit der C-ringförmigen Führung (2) entlang der vertikalen Führung (3) vertikal gegenüber dem in der Maschine (20) eingelegten Werkstück (14) verschiebbar ist und die C-ringförmige Führung (2) eine die C-ringförmige Form aufnehmende Rollenbahn (10) aufweist, in welcher mindestens zwei Rollen (11) und mindestens eine Bremseinheit (7), welche mit einem Rollenhalter (9) verbunden sind, die C-ringförmige Führung (2) verdrehbar um das Zentrum der C-ringförmigen Führung (2) lagern, und der Rollenhalter (9) mit der vertikalen Führung (3) verbunden ist.

2. Anordnung nach Anspruch 1, **dadurch gekennzeichnet, dass** die C-ringförmige Führung (2) an einer zweiten vertikalen Führung (5) und/oder an einer bogenförmigen Führung (4) anordenbar ist.

3. Anordnung nach Anspruch 1 oder 2, **dadurch gekennzeichnet, dass** der Schleifkopf (1) auf oder an der C-förmigen Führung (2) mittels mindestens einer am Gehäuse des Schleifkopfes (1) angeordneten Führungsrolle (12) entlang mindestens einer Lauffläche (13) geführt ist.

4. Anordnung nach Anspruch 2, **dadurch gekennzeichnet, dass** die bogenförmige Führung (4) ein Tragarm der Maschine (20) ist und über entsprechende Lagerungen an der Maschine (20) in horizontaler Richtung entlang des Werkstückes (14) verschiebbar angeordnet ist.

5. Anordnung nach Anspruch 1 oder 2, **dadurch gekennzeichnet, dass** die zweite vertikale Führung (5) mit der vertikalen Führung (3) verbunden ist.

6. Anordnung nach Anspruch 2, **dadurch gekennzeichnet, dass** am Schleifkopf (1) ein Anschlag (6) angeordnet ist, mittels dessen der Schleifkopf (1) gemeinsam mit der C-ringförmigen Führung (2) der vertikalen Führung (3) und/oder der zweiten vertikalen Führung (5) in einer vordefinierten Lage zu mindestens einer der Oberflächen der bogenförmigen Führung (4) anordenbar und/oder an der bogenförmigen Führung (4) fixierbar ist.

7. Anordnung nach Anspruch 1, **dadurch gekennzeichnet, dass** der Schleifkopf (1) fest mit der C-ringförmigen Führung (2) verbunden ist und/oder die C-ringförmige Führung (2) mittels der mindestens einen Bremseinheit (7) im Schleifbetrieb des Schleifkopfes (1) arretierbar ist.

8. Anordnung nach einem der vorangehenden Ansprüche, **dadurch gekennzeichnet, dass** der Schleifkopf (1) zur Aufnahme von mindestens einer Schleifscheibe oder Schleifanordnung dient und der Schleifkopf (1) mittels einer elektronischen Steuerung mittels eines elektrischen und/oder hydraulischen Antriebs verschiebbar ist.

9. Anordnung nach einem der vorangehenden Ansprüche, **dadurch gekennzeichnet, dass** die C-ringförmige Führung (2) gemeinsam mit dem an ihr angeordneten Schleifkopf (1) an der vertikalen Führung (3) und/oder der zweiten vertikalen Führung (5) von einer elektrischen Antriebseinheit, gesteuert von der Steuereinheit der Maschine (20), verschiebbar ist und/oder dass die bogenförmige Führung (4) über die Steuereinheit der Maschine (20) mittels mindestens einer Antriebseinheit, elektrischer oder hydraulischer Art, horizontal entlang des Werkstückes verschiebbar angeordnet ist.

## Claims

1. Assembly for holding a grinding head (1) for a machine (20) to grind edges and/or front surfaces of workpieces (14) consisting of a C-ring-shaped guide (2), at which the grinding head (1) is arranged at least partially pivoted around the workpiece (14) inserted into the machine (14), wherein additionally the grinding head (1) with the C-ring-shaped guide (2) is at least partially pivoted around the workpiece (14) inserted into the machine (20), that the C-ring-shaped guide (2) is arranged on a vertical guide (3) and that the grinding head (1) is jointly movable with the C-ring-shaped guide (2) along the vertical guide (3) vertically opposite the workpiece (14) inserted into the machine (20) and the C-ring-shaped guide (2) contains a roller conveyor (10) including the C-ring-shaped form, in which at least two rollers (11) and at least one brake unit (7), which are connected to a roll holder (9), pivot the C-ring-shaped guide (2) around the center of the C-ring-shaped guide (2), and the roll holder (9) is connected to the vertical guide (3).

2. Assembly according to claim 1, **characterized in that** the C-ring-shaped guide (2) is arranged on a second guide (5) and/or on an arched guide (4).

3. Assembly according to claim 1 or 2, **characterized in that** the grinding head (1) is guided at or on the C-ring-shaped guide (2) by means of at least one guide roller (12) arranged on the housing of the grinding head (1) along at least one tread (13).

4. Assembly according to claim 2, **characterized in that** the arched guide (4) is a support arm of the machine (20) and is arranged movable in horizontal direction along the workpiece (14) by appropriate bearings at the machine (20).

5. Assembly according to claim 1 or 2, **characterized in that** the second vertical guide (5) is connected to the vertical guide (3).

6. Assembly according to claim 2, **characterized in that** a stop (6) is arranged on the grinding head (1), by means of which the grinding head (1) along with the C-ring-shaped guide (2) of the vertical guide (3) and/or of the second vertical guide (5) is arrangeable in a pre-defined position to at least one of the arched guide's (4) surfaces and/or fixable on the arched guide (4).

7. Assembly according to claim 1, **characterized in that** the grinding head (1) is firmly attached to the C-ring-shaped guide (2) and/or the C-ring-shaped guide (2) is lockable in grinding mode of the grinding head (1) by means of the at least one brake unit (7).

8. Assembly according to one of the preceding claims, **characterized in that** the grinding head (1) is provided for holding at least one grinding disk or grinding arrangement and the grinding head (1) is movable by means of an electrical control by means of an electric and/or hydraulic drive.

9. Assembly according to one of the preceding claims, **characterized in that** the C-ring-shaped guide (2) along with the grinding head (1), arranged on it, is movable on the vertical guide (3) and/or the second vertical guide (5) by an electric drive controlled by the machine's (20) control and/or the arched guide (4) is arranged movable horizontal along the workpiece via the machine's (20) control by means of at least one drive, of electric or hydraulic type.

## Revendications

1. Ensemble destiné à loger une tête de meulage (1) pour une machine (20) destinée à meuler des bords et/ou des faces frontales de pièces (14), constitué d'un guidage annulaire en C (2), sur ou contre lequel la tête de meulage (1) est agencée de manière à pouvoir pivoter au moins en partie autour de la pièce (14) insérée dans la machine (20), dans lequel la tête de meulage (1) peut pivoter avec le guidage annulaire en C (2) au moins en partie autour de la pièce (14) insérée dans la machine (20), en ce que le guidage annulaire en C (2) est agencé sur un guidage vertical (3) et en ce que la tête de meulage (1) peut coulisser verticalement par rapport à la pièce (14) insérée dans la machine (20) le long du guidage vertical (3) conjointement avec le guidage annulaire en C (2) et le guidage annulaire en C (2) présente un chemin de roulement (10) recevant la forme annulaire en C et dans lequel au moins deux rouleaux (11) et au moins une unité de freinage (7), lesquels sont reliés à un porte-rouleaux (9), supportent le guidage annulaire en C (2) de manière à pouvoir tourner autour du centre du guidage annulaire en C (2), et le porte-rouleaux (9) est relié au guidage vertical (3).

2. Ensemble selon la revendication 1, **caractérisé en ce que** le guidage annulaire en C (2) peut être agencé sur un deuxième guidage vertical (5) et/ou sur un guidage arqué (4).

3. Ensemble selon la revendication 1 ou 2, **caractérisé en ce que** la tête de meulage (1) est guidée sur ou contre le guidage en C (2) au moyen d'au moins un rouleau de guidage (12) agencé sur le boîtier de la tête de meulage (1) le long d'au moins une surface de roulement (13).

4. Ensemble selon la revendication 2, **caractérisé en ce que** le guidage arqué (4) est un bras de support de la machine (20) et est agencé de manière à pouvoir coulisser le long de la pièce (14) dans la direction horizontale sur la machine (20) par l'intermédiaire de supports correspondants.

5. Ensemble selon la revendication 1 ou 2, **caractérisé en ce que** le deuxième guidage vertical (5) est relié au guidage vertical (3).

6. Ensemble selon la revendication 2, **caractérisé en ce qu'**une butée (6) est agencée sur la tête de meulage (1), butée au moyen de laquelle la tête de meulage (1) peut être agencée conjointement avec le guidage annulaire en C (2) du guidage vertical (3) et/ou du deuxième guidage vertical (5) dans une position prédéfinie par rapport à au moins une des surfaces du guidage arqué (4) et/ou peut être fixée au guidage arqué (4).

7. Ensemble selon la revendication 1, **caractérisé en ce que** la tête de meulage (1) est reliée solidement au guidage annulaire en C (2) et/ou le guidage annulaire en C (2) peut être arrêté au moyen de la au moins une unité de freinage (7) lorsque la tête de meulage (1) se trouve en mode meulage.

8. Ensemble selon l'une quelconque des revendications précédentes, **caractérisé en ce que** la tête de meulage (1) sert à loger au moins une meule abrasive ou un ensemble de meulage et la tête de meulage (1) peut coulisser au moyen d'une commande électronique au moyen d'un entraînement électrique et/ou hydraulique.

9. Ensemble selon l'une quelconque des revendications précédentes, **caractérisé en ce que** le guidage annulaire en C (2) peut être amené à coulisser conjointement avec la tête de meulage (1) agencée sur celui-ci sur le guidage vertical (3) et/ou le deuxième guidage vertical (5) par une unité d'entraînement électrique, commandée par l'unité de commande de la machine (20), et/ou **en ce que** le guidage arqué (4) est agencé de manière à pouvoir coulisser horizontalement le long de la pièce par l'intermédiaire de l'unité de commande de la machine (20) au moyen d'au moins une unité d'entraînement, du type électrique ou hydraulique.
